# EUROPÄISCHE PATENTANMELDUNG

(11) **EP 0 861 011 A2**
(43) Veröffentlichungstag der Anmeldung: **26.08.1998**
(21) Anmeldenummer: 98101831.0
(22) Anmeldetag: 03.02.1998
(51) Int. Cl.: H04Q 7/38

(54) **Verfahren zum Subskripieren von schnurlos an ein Kommunikationsnetz angeschlossenen, mobilen Kommunikationsendgeräten**

(30) Priorität: 24.02.1997 DE 19707268
(71) Anmelder: SIEMENS AKTIENGESELLSCHAFT, 80333 München (DE)
(72) Erfinder: Galensa, Klaus, Boca Raton, FL 33431 (US); Morper, Hans-Jochen, 85253 Erdweg (DE); Troch, Eddy, 2547 Lint (BE); Rockstuhl, Hanspeter, 80804 München (DE)

(57) **Zusammenfassung**

Ein vom Kommunikationsnetz (KN) übermittelter Authentisierungs-Anreiz (RAND-F,RS) wird vom Kommunikationsendgerät (KE) verschlüsselt beantwortet. Die Antwort (RES1) wird in der Heimat-Datenbasis (HDB) hinschtlich Eindeutigkeit überprüft. Bei einer Mehrdeutigkeit wird der Vorgang mit einer weiteren, modifizierten Verschlüsselungs-Information (RAND-F,RS) wiederholt. Bei diesem auf dem DECT-Standard basierenden Verfahren wird die Sicherheit der Subskripierung erheblich gesteigert.

## Beschreibung

Im Heimbereich und im Bereich von privaten Kommunikationssystemen sind Kommunikationsendgeräte drahtlos bzw. schnurlos an Basisstationen anschließbar. Die Luftschnittstelle für den drahtlosen bzw. schnurlosen Anschluß ist durch den DECT-Standard (Digital Enhanced Cordless Telecommunications) 300 175 - Teil 1 bis 8 definiert - Die technischen Anforderung von schnurlos nach DECT-Standard verbundenen Kommunikationsendgeräten und Basisstationen sind in einem ETST-Standard GAP (Generic Acces Profile) standardisiert. Die beiden Standards sind insbesondere für Kommunikationsendgeräte mit Telefonfunktion vorgesehen, wobei die Sprachinformation komprimiert in zeitmultiplexorientierten Rahmen über die Luftschnittstellle übertragen wird.

Des weiteren sind in Kommunikationsnetzen Kommunikationsendgerät leitungsgebunden über Drahtlos-Übertragungseinrichtungen Zubringer-Kommunikationsnetze oder Kommunikationsnetze anschließbar. Bei diesen drahtlosen Anschluß - in der Fachweit als 'Radio in the Loop' bekannt -, sind im Teilnehmeranschlußbereich Anschlußeinrichtungen, an die die Kommunikationsendgeräte drahtgebunden angeschlossen sind, drahtlos mit Basisstationen verbunden - beispielsweise aus der Druckschrift der Druckschrift 'DECTlink Radio Access: Where Performance Counts', A 50001-N7-P1-1-7600 ,1995,Siemens AG bekannt. Für diesen drahtlosen Anschluß werden derzeit zwei Standards definiert: ein RAP-Standard (Radio Access Profile) für den Anschluß von Kommunikationsendgeräten an a/b-Schnittstellen und ein DECT-Intermediate Standard für den Anschluß von ISDN-Kommunikationsendgeräten, wobei beide Standards hinsichtlich der Luftschnittstelle wiederum auf dem DECT-Standard basiseren.

Für zukünfige Kommunikationsnetze sind Konzeptionen vorgesehen, bei denen mobile Kommunikationsendgeräte drahtlos bzw. schnurlos an das Kommunikationsnetz angeschlossen sind. Hierbei sind im Kommunikationsnetz Basisstationen vorgesehen, an die die mobilen Kommunikationsendgeräte drahtlos angeschlossen sind. Es ist bereits vorgeschlagen worden, die für die Mobilität der drahtlos angeschlossenen Kommunikationsendgeräte erforderlichen Mobilitäts-Mangement-Funktionen in einem dem Kommunikationsnetz zugeordneten intelligenten Netz zu realisieren, wobei das intelligente Netz dem Kommunikationsnetz überlagert ist. Das intelligente Netz ist hierbei durch an das Kommunikationsnetz angeschlossene Server realisiert und der erforderliche Austausch von Mobilitäts-Management-Informationen wird durch das Kommunikationsnetz und den Servern gesteuert.

Für die Subskription von mobilen, drahtlos angeschlossenen Kommunikationsendgeräten sind im intelligenten Kommunikationsnetz Heimat- und Besucher-Datenbasen vorgesehen, in denen Subskriptions-Daten bzw. teilnehmerindividuelle Informationen einschließlich von Mobilitäts-Management-Informationen gespeichert sind. Bei einer Beschaffung eines mobilen, drahtlos anzuschließenden Kommunikationsendgerätes - z.B. einem Kauf - ist ein Authentisierungs-Code, d.h. eine Geheimnummer - für die Subskription des jeweiligen Kommunikationsendgerätes im Kommunikationsnetz vorgesehen. Der Authentisierungs-Code darf nicht aus sicherheitstechnischen Gründen nicht über die Luftschnittstelle übertragen werden.

Die der Erfindung zugrundeliegende Aufgabe besteht darin, ein sicheres Verfahren zur Subskription von mobilen, drahtlos angeschlossenen Kommunikationsendgeräten im Kommunikationsnetz auszugestalten, wobei die Subskriptions-bezogenen Informationen in einer Heimat-Datenbasis gespeichert sind. Die Aufgabe wird durch die Merkmale des Anspruch 1 gelöst.

Der wesentliche Aspekt des erfindungsgemäßen Verfahren ist darin zu sehen, daß bei einem Verfahrensschritt a) eine vom Kommunikationsendgerät übermittelte Zugriffsrechts-Anforderung vom Kommunikationsnetz an die Heimat-Datenbasis weitergeleitet und bei einem Verfahrensschritt b) von der Heimat-Datenbasis eine Verschlüsselungs-Information über das Kommunikationsnetz an das anfordernde Kommunikationsendgerät übermittelt wird. Bei einem Verfahrensschritt c) wird vom Kommunikationsendgerät eine mit Hilfe der Verschlüsselungs-Information teilweise verschlüsselte Authentisierungs-Anforderung über das Kommunikationsnetz an die Heimat-Daten-basis übermittelt und bei einem Verfahrensschritt d) in der Heimat-Datenbasis die übermittelte Authentifizierungs-Anforderdung auf Eindeutigkeit überprüft. Bei einer Mehrdeutigkeit der übermittelten Authentisierungs-Anforderdung werden die Verfahrensschritte b) bis d) wiederholt, wobei die Verschlüsselungs-Information modifiziert wird. Der wesentlichen Vorteile des erfindungsgemäßen Verfahren sind darin zu sehen, daß das Verfahren auf bekannten Protokollelementen und Protokoll-Informationen des DECT-Standards - insbesondere Teil 7 - basiert - Anspruch 10 -, wobei eine maximale Sicherheit bei der Erkennung der übermittelten Authentifizierungs-Information erreicht wird. Die Sicherheit wird dadurch erreicht, daß bei einer Mehrdeutigkeit der übermittelten AuthentifizierungsInformation - d.h. es sind zwei oder mehrere gleiche, zumindest Teile der Authentifizierungs-Informationen - gespeichert - die relevanten Subskriptionsschritte solange wiederholt werden, bis die Eindeutigkeit und damit höchste Sicherheit gewährleistet ist. Eine Mehrdeutigkeit kann bei bestimmten Verschlüsselungen aufgrund der verwendeten Schlüssel auftreten - eine Mehrdeutigkeit ist auch bei den DECT-Standard-Schlüsseln möglich.

Nach einem Feststellen der Eindeutigkeit der übermittelten Authentisierungs-Anforderdung in der Heimat-Datenbasis wird das Verfahren zum Subskripieren dadurch weitergeführt, daß eine Erwiderung einschließlich eines Zugriffsschlüssels, einer berechneten Erwiederungs-Information sowie einer Mobilitäts-Management-Information über das Kommunikationsnetz übermittelt wird - Anspruch 3. Über dieses wird eine Authentisierungs-Erwiderung einschließlich der berechneten Erwiderungs-Information und eine Zugriffs-Bestätigung einschließlich des Zugriffsschlüssels und der Mobilitäts-Information an das betroffene Kommunikationsendgerät übermittelt - Anspruch 4. Dieser Protokoll-Ablauf basiert ebenfalls auf DECT-Standard-Elementen

Gemäß einer vorteilhaften Ausgestaltung des erfindungsgemäßen Verfahrens ist die Überprüfung der Authentisierungs-Anforderung in der Heimat-Datenbasis (HDB) während eines vorgegebenen Zeitfensters möglich - Anspruch 7. Hierbei wird während eines Zeitfensters für alle Subskriptionen eine gleichartige Verschlüsselungs-Information verwendet und bei einer Mehredeutigkeit der Subskriptionen für ein Kommunikationsendgerät (KE) werden modifiziert Verschlüsselungs-Informationen verwendet - Anspruch 8. Die berechneten Authentisierungs-Anforderungen mit modifiziertn Verschlüsselungs-Informationen werden jeweils in weiteren, temporär geführten Listen zwischengespeichert, die jeweils nach einer vollständigen Subskripierung wieder gelöscht werden. Für die Subskripierung für andere Kommunikationsendgeräte wird wieder die für dieses Zeitfenster ursprünglich vorgesehene Verschlüsselungs-Information bzw. Verschlüsselungs-Code verwendet, wobei bei Heimat-Daten-Basis-spezifischen, aufeinanderfolgenden Zeitfenstern unterschiedlich modifizierte Verschlüsselungs-Informationen verwendet werden können.

Das Zeitfenster selbst wird durch den Erwerber eines Kommunikationsendgerätes dadurch bestimmt, daß dieser beim zuständigen Betreiber des Kommunikationsnetzes seine Subskripierung telefonisch - jedoch an einem anderen Fernsprechendgerät - ankündigt, worauf der Betreiber des Kommunikationsnetzes in der Heimat-Datenbasis beispielsweise für ein Zeitfenster von einem Tag die erstmalige Subskription dieses Kommunikationsendgerätes erlaubt, d.h. die relevanten Subskriptions-Daten bereitstellt. Wird die Subskription in diesem Zeitfenster nicht durchgeführt, muß von dem jeweiligen Erwerber des Kommunikationsendgerätes erneut eine Subskripierung telefonisch angekündigt werden, worauf erneut ein Zeitfenster beispielsweise von einem Tag eingerichtet wird. Die Zeitfenster sind vorgesehen, um die Heimat-Datenbasis nicht durch eine ständige Bereitschaft von möglichen Subskripierungen zu überlasten.

Gemäß einer Weiterbildung der Erfindung enthält die Authentisierungs-Anforderung Verschlüsselungs-Informationen, die mit Hilfe des Authentisierungs-Codes und der Verschlüsselungs-Information gebildet werden - Anspruch 5. Der Authentisierungs-Code wird vom Betreiber eines Kommunikationsnetzes vergeben und bei der Anschaffung eines Kommunikationsendgerätes mitgeliefert.

Nach einer weiteren Ausgestaltung des erfindungsgemäßen Verfahrens erfolgt die Überprüfung der übermittelten Authentisierungs-Anforderdung auf Eindeutigkeit durch Vergleich eines Teils der übermittelten Authentisierungs-Anforderdung mit einem vorgegebenen, gespeicherten Teil der Authentifizierungs-Information, wobei der gespeicherte und der übermittelte Teil der Authentifizierungs-Informationen gleichartig gebildet werden - Anspruch 9.

Weitere vorteilhafte Ausgestaltungen der Erfindung sind den weiteren Ansprüchen zu entnehmen.

Im folgenden wird das erfindungsgemäße Verfahren anhand eines Blockschaltbildes und eines Ablaufdiagrammes näher erläutert. Dabei zeigen
- FIG 1: in einem Blockschaltbild die Struktur eines Kommunikationsnetzes für das erfindungsgemäße Verfahren und
- FIG 2: anhand eines Ablaufdiagrammes das erfindungsgemäße Verfahren.

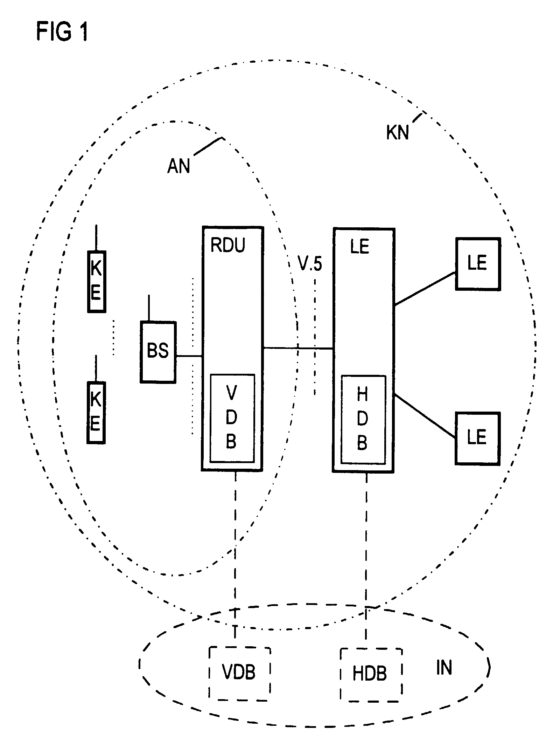

FIG 1 zeigt ein Kommunikationsnetz KN - durch eine strichpunktierte Linie angedeutet -, das durch ein Zubringernetz AN - durch eine strich-punktierte Linie angedeutet - und durch Kommunikationssysteme LE gebildet ist. Das Zubringernetz AN weist eine Radio-Distribution-Einheit RDU auf, die über eine standardisierte V.5-Schnittstelle V.5 mit einem der Kommunikationssysteme LE verbunden ist. An die Radio-Distribution-Einheit RDU sind Basisstationen BS angeschlossen, an die drahtlos bzw. schnurlos Kommunikationsendgeräte KE angeschlossen sind. Sowohl die Funkbereiche dieser Basisstationen BS als auch die von weiteren Radio-Distribution-Einheiten RDU und der zugehörigen Verbindungsleitungen - nicht dargestellt - repräsentieren das Zubringernetz AN. Das Zubringernetz und auch die verbleibenden Komponenten des Kommunikationsnetzes können beispielsweise als öffentliches Fernsprech- oder ISDN-Kommunikationsnetz realisiert sein. Alternativ kann das Kommunikationsnetz auch von privaten Betreibern installiert und betrieben werden.

Die Luftschnittstelle für den drahtlosen bzw. schnurlosen Anschluß ist vorteilhaft gemäß dem DECT-Standard (Digital Enhanced Cordless Telecommunications) - ETSI-Standard 300 175 Teil 1 bis 8 - realisiert. Hierbei können die schnurlos angeschlossenen Kommunikationsendgeräte KE und die Basisstationen BS gemäß dem GAP-Standard (Generic Acces Profile) oder gemäß dem CAP-Standard (CTM(Cordless Terminal Mobility) Acces Profile) ausgestaltet werden.

Für die Subskription von Kommunikationsendgeräten KE im Zubringernetz AN bzw. im Kommunikationsnetz KN ist zumindest eine Besucher-Datenbasis VDB und eine Heimat-Datenbasis HDB vorgesehen. Hierbei werden in der Heimat-Datenbasis HDB die für eine Subskription vorgesehenen teilnehmerindividuellen Subskriptions-Daten gespeichert und in der Besucher-Datenbasis VDB temporär die Subskriptions-Daten derjenigen Kommunikationsendgeräte KE zwischengespeichert, die in dem der Besucher-Datenbasis VDB zugeordneten Bereich registriert sind, d.h. die sich in diesem Bereich aufhalten. Wechselt das Kommunikationsendgerät den Bereich, so wird das Kommunikationsendgerät in einem weiteren Bereich bzw. in einer weiteren Besucher-Datenbasis VDB angemeldet.

Beim Erwerb eines 'Cordless'-Kommunikationsendgerätes KE wird eine Geheimnummer mitgeliefert, mit der ein Subskripieren des mobilen Kommunikationsendgerätes KE im Kommunikationsnetz KN durchgeführt wird. Vor dem Subskripieren wird vom Erwerber des Kommunikationsendgerätes KE beim Betreiber - öffentlich oder privat - telefonisch seine Subskripierung angekündigt. Daraufhin wird vom Betreiber die Heimat-Datenbasis HDB für dieses Kommunikationsendgerät KE für eine Subskription eingerichtet, d.h. stehen die relevanten Subskripitions-Daten bereit. Diese Bereitschaft besteht beispielsweise für ein Zeitfenster von einem Tag. Dies bedeutet, daß vom beantragenden Kommunikationsendgerät KE einen Tag die Subskripierung durchgeführt werden darf.

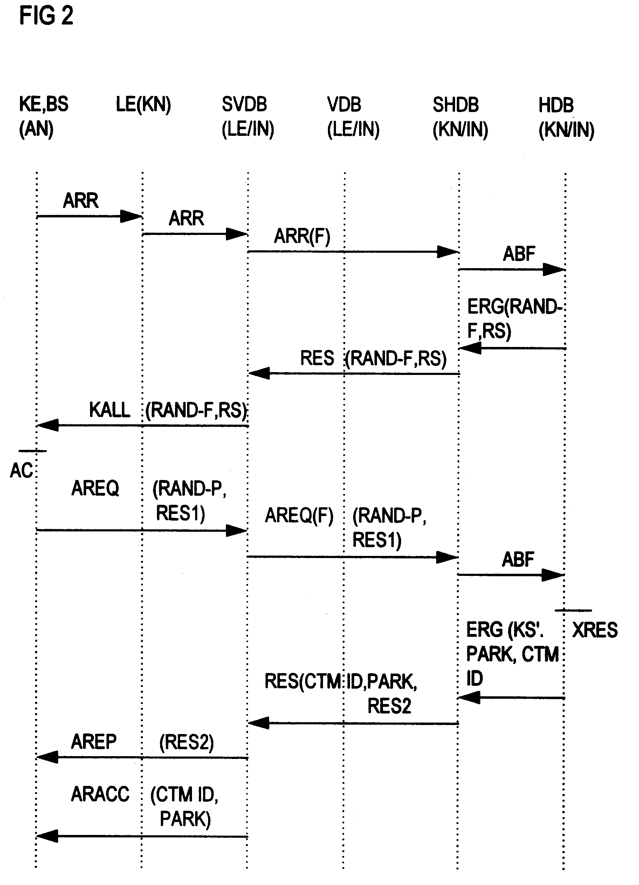

Die subskripierung wird durch die Eingabe der mitgelieferten Geheimnummer AC und einer Rufnummer RN eingeleitet, wobei durch die Rufnummer RN die Besucher-Datenbasis VDB des Kommunikationsnetzes KN adressiert ist. Durch diese Eingabe und beispielsweise einer Aktivierung durch eine spezielle Taste wird das erfindungsgemäße Verfahren eingeleitet, das in FIG 2 anhand eines Ablaufdiagrammes dargestellt ist. Das Ablaufdiagramm ist im wesentlichen sich selbst erläuternd und basiiert auf DECT-Informationen und Meldungen, die im DECT-Standard 300 175 - Teil 7 definiert sind.

### Hierbei bedeuten:

- ARR: Access Right Request - Zugriffrecht-Anforderung,
- ARR(F): Forwarding Access Right Request - Weiterleiten der Zugriffsrech-Anforderung,
- ABF: Abfrage der Heimat-Datenbasis HDB,
- ERG: Ergebnis-Meldung auf eine Anfrage ABF der Heimat-Datenbasis HDB,
- KALL: Key Allocate - Schlüssel-Zuteilungs-Meldung
- RAND-F: RANDom Challenge,Fixed Part - Zufalls-Authentisierungs-Code der Kommunikationsnetzes KN,
- RS: Wert zur Verfügungstellung eines Authentication Session KEY für eine Besucher-Datenbasis VDB,
- AC: Authetisierungs-Code,
- AREQ: Authetisierungs-Anforderung,
- RAND-P: RANDom Challenge,Mobile Part - Zufalls-Authentisierungs-Code des Kommunikationsendgerätes KE,
- RES: Erwiderung der Heimat-Datenbasis HDB an die anfordernde Besucher-Datenbasis (BDB),
- RES1: Wird aus RAND-F und KS gemäß dem im DECT-Standard 300-175 Teil 7 angegebenen Prozess 12 berechnet, wobei KS mit Hilfe des Prozesses 11 des gleichen Standards aus dem Authentisierungs-Code AC und RS berechnet wird,
- CTM ID: Mobilitäts-Management-Information
- PARK: Portable Access Right Key - Zugangsschlüssel für das Kommunikationsendgerät KE,
- RES2: Wird bereichnet aus RAND-P und KS' gemäß dem DECT-Standard-gemäßen Prozess 22, wobei KS' aus RS und dem DECT-Standard-gemäßen Prozess 21 berechnet wird,
- AREP: Authentication Reply - Authentisierungs-Erwiderung, und
- ARRCC: Access Right Accept - Zugriffs-Bestätigung.

Basis des in FIG 2 dargestellten Ablaufdiagramms sind punktierte senkrechte Linie, die jeweils eine Einheit des in FIG 2 dargestellten Kommunikationsnetzes KN repräsentieren. Die Besucher-Datenbasis VDB und die Heimat-Datenbasis HDB können auch in einem intelligenten Netz IN angeordnet werden - in FIG 1 durch strichlierte Linien angedeutet. In FIG 2 ist der Besucher-Datenbasis VDB und der Heimat-Datenbasis HDB jeweils eine Steuerung SVDB, SHDB zur Steuerung der Abläufe und der Anfragen an die jeweiligen Datenbasen HDB,VDB vorgesehen.

## Patentansprüche

1. Verfahren zum Subskripieren von mobilen, drahtlos an ein Kommunikationsnetz (KN) angeschlossenen Kommunikationsendgeräten (KE), wobei dem Kommunikationsnetz (KN) für die Speicherung von teilnehmerindividuellen Daten zumindest eine Besucher- und eine Heimat-Datenbasis (VDB,HDB) zugeordnet ist,
a) bei dem bei eine vom Kommunikationsendgerät (KE) übermittelten Zugriffsrechts-Anforderung (ARR) vom Kommunikationsnetz (KN) an die Heimat-Datenbasis (HDB) weitergeleitet wird,
b) bei dem von der Heimat-Datenbasis (HDB) eine Verschlüsselungs-Information (RAND-F,RS) über das Kommunikationsnetz (KN) und von diesem an das anfordernde Kommunikationsendgerät (KE) übermittelt wird,
c) bei dem vom Kommunikationsendgerät (KE) eine mit Hilfe der Verschlüsselungs-Information (RAND-F,RS) teilweise verschlüsselte Authentisierungs-Anforderdung AREQ(RAND-P, RES1) über das Kommunikationsnetz (KN) an die Heimat-Datenbasis (HDB) übermittelt wird,
d) bei dem in der Heimat-Datenbasis (HDB) die übermittelte Authentisierungs-Anforderdung AREQ(RAND-P,RES1) auf Eindeutigkeit überprüft wird, und
e) bei dem bei einer Mehrdeutigkeit der übermittelten Authentisierungs-Anforderdung (RAND-P,RES1) die Schritte b) bis d) wiederholt werden, wobei die Verschlüsselungs-Information (RAND-F,RS) modifiziert wird.

2. Verfahren nach Anspruch 1, dadurch **gekennzeichnet,** daß bei einer mehrmaligen Mehrdeutigkeit die Schritte b) bis d) jeweils wiederholt werden, wobei jeweils die Verschlüsselungs-Information (RAND-F,RS) modifiziert wird.

3. Verfahren nach Anspruch 1 oder 2, dadurch **gekennzeichnet,** daß bei einer Eindeutigkeit der übermittelten Authentisierungs-Anforderdung REQ(RAND-P,RES1) von der Heimat-Datenbasis (HDB) eine Erwiderung (RES) einschließlich eines Zugriffsschlüssels (PARK), einer berechneten Erwiderungs-Information (RES2) sowie einer Mobilitäts-Information (CTM-ID) über das Kommunikationsnetz (KN) übermittelt wird.

4. Verfahren nach Anspruch 3, dadurch **gekennzeichnet,** daß vom Kommunikationsnetz (KN)
- eine Authentisierungs-Erwiderung (AREP) einschließlich der berechneten Erwiderungs-Information (RES2) und
- eine Zugriffs-Bestätigung (ARRCC) einschließlich des Zugriffsschlüssels (PARK) und der Mobilitäts-Information (CTM-ID)
an das betroffene Kommunikationsendgerät (KE) übermittelt wird.

5. Verfahren nach einem der vorhergehenden Ansprüche, dadurch **gekennzeichnet,**
daß die Authentisierungs-Anforderung REQ VerschlüsselungsInformationen (RAND-P,RES1) enthält, die mit Hilfe des Authentisierungs-Codes (AC) und der Verschlüsselungs-Information (RAND-F,RS) gebildet wird.

6. Verfahren nach Anspruch 5, dadurch **gekennzeichnet,**
daß der Authentisierungs-Code (AC) bei der Subskription eines Kommunikationsendgerätes (KE) zusammen mit der Initialisierung-Rufnummer (RN) eingegeben wird.

7. Verfahren nach einem der vorhergehenden Ansprüche, dadurch **gekennzeichnet,**
daß die Überprüfung der Authentisierungs-Anforderung (RAND-F,RES1) in der Heimat-Datenbasis (HDB) während eines vorgegebenen Zeitfensters möglich ist.

8. Verfahren nach Anspruch 7, dadurch **gekennzeichnet,**
daß während eines Zeitfensters für alle Subskriptionen eine gleichartige Verschlüsselungs-Information (RAND-F,RS) verwendet wird, und daß bei einer Mehrdeutigkeit der Subskriptionen für ein Kommunikationsendgerät (KE) modifizierte Verschlüsselungs-Informationen (RAND-F,RS) verwendet werden.

9. Verfahren nach einem der vorhergehenden Ansprüche, dadurch **gekennzeichnet,**
daß die Überprüfung der übermittelten Authentisierungs-Anforderdung (RAND-F,RES1) auf Eindeutigkeit durch Vergleich der eines Teils (RES1) der übermittelten Authentisierungs-Anforderdung (RAND-P,RES1) mit einem gespeicherten Teil (XRSE1) des Authentifizierungs-Information (RAND-F,RES1) erfolgt, wobei der Teil (XRES1,RES1) der gespeicherten und übermittelten Authentifizierungs-Informationen (RAND-F,RES1) gleichartig gebildet werden.

10. Verfahren nach einem der vorhergehenden Ansprüche, dadurch **gekennzeichnet,**
daß die Verschlüsselungs-Information (RAND-F,RS), die Zugriffsrechts-Anforderung (ARR), die Authentifizierungs-Anforderdung (RAND-P,RES1), die Erwiderung (RES), die Erwiederungs-Information (RES2), der Authentisierungs-Erwiderung und die Zugriffs-Bestätigung und der Authentisierungs-Code (AC) auf Meldungen und Informationen gemäß dem DECT-Standard basieren.

11. Verfahren nach einem der vorhergehenden Ansprüche, dadurch **gekennzeichnet,**
daß die Heimat- und die Besucher-Datenbasis (HDB,VDB) in einem dem Kommunikationsnetz (KN) zugeordneten intelligenten Netz (IN) realisiert sind, wobei der Meldungs- und Informationsaustausch mit Hilfe des Kommunikationsnetzes (KN) und des intelligenten Netzes (IN) gesteuert wird.

12. Verfahren nach einem der Ansprüche 1 bis 9, dadurch **gekennzeichnet,**
daß die Heimat- und die Besucher-Datenbasis (HDB,VDB) im Kommunikationsnetz (KN) realisiert sind, wobei der Meldungs- und Informationsaustausch mit Hilfe des Kommunikationsnetzes (KN) gesteuert wird.
